# EUROPEAN PATENT APPLICATION

(11) **EP 4 649 860 A2**
(43) Date of publication of application: **19.11.2025**
(21) Application number: 25176914.7
(22) Date of filing: 16.05.2025
(51) Int. Cl.: A45F 5/00, H04B 1/3888

(54) **HAND GARMENT AND WEARABLE SYSTEM**

(30) Priority: 17.05.2024 DE 102024114005
(71) Applicant: Workaround GmbH, 81379 München (DE)
(72) Inventor: Juric, Danijel, 81379 München (DE); Arvind, Arvind, 81379 München (DE); Stilwell, David, 81379 München (DE); Kettner, Michael, 81379 München (DE)
(74) Representative: Flach Bauer & Partner Patentanwälte mbB

(57) **Abstract**

A hand garment (24) has a dorsal section (30), a fastening section (32), and a mount (26) for mounting a detachable wearable interface unit (16) to the dorsal section (30). The mount (26) has a base plate (66) and at least two fixation wings (68), wherein the fixation wings (68) extend from opposite edges of the base plate (66) and define a receiving space (29) for the interface unit (16) between them. The width (wₛ) of the receiving space (29) is larger than the width (w_{b}) of the base plate.

Further, a wearable system (28) is provided.

## Description

The invention relates to a hand garment as well as to a wearable system.

Wearable interface units that assist users or workers in industrial or logistics settings to fulfill their tasks are well-known.

These interface units are typically attached to a piece of clothing of the respective user, in particular the back of the hand.

To this end, hand garments are known that comprise a mount for such interface units.

The demands on the capabilities of these interface units have increased drastically so that the interface units necessitate a wide variety of different electronic components which increase the volume needed by the interface unit.

At the same time, the interface units have to be worn ergonomically and with a high comfort for the user, as the interface units are usually worn for several hours at a time.

Thus, it is an object of the invention to provide a hand garment and a wearable system that provides very good ergonomics and a high comfort for the user while, at the same time, allowing the interface unit to have a large functional volume for electronics.

For this purpose, a hand garment is provided. The hand garment comprises a dorsal section configured to cover at least parts of the dorsum of a user's hand, a fastening section configured to fasten the dorsal section on the dorsum of the user's hand, and a mount for mounting a detachable wearable interface unit to the dorsal section. The mount is fixed to the dorsal section and comprises a base plate and at least two fixation wings. The fixation wings extend from opposite edges of the base plate in a first direction and define a receiving space for the interface unit between them. The width of the receiving space is larger than the width of the base plate.

By providing a mount with a base plate that is smaller than the receiving space for the interface unit, the base plate can be kept small so that any discomfort that may arise due to the stiff base plate at the back of the hand is kept at a minimum. At the same time, due to the larger receiving space, the interface unit is provided with a large functional volume.

In particular, the widths are measured in the transverse direction of the mount.

Within this disclosure the transverse direction of the mount is referred to as the "transverse direction" and the longitudinal direction of the mount is referred to as the "longitudinal direction", for simplicity. For example, the transverse direction and the longitudinal direction of the mount correspond to the transverse direction of the user's hand and the longitudinal direction of the user's hand, respectively. It is also conceivable that the transverse direction and the longitudinal direction of the mount correspond to the longitudinal direction of the user's hand and the transverse direction of the user's hand, respectively.

In particular, the widths, heights and length are to be understood as the maximum widths, heights and length, respectively, of the respective component.

For example, at any point in the longitudinal direction, the width of the receiving space is larger than the width of the base plate.

For example, in an orthogonal projection into the plane of base plate or spanned by the transversal and longitudinal direction, the first direction of each of the fixation wings extends at least partially, in particular predominantly, in the transverse direction of the mount.

The first direction of each of the fixation wings may differ from one another and/or may be mirrored with respect to a middle axis of the base plate in the transverse direction.

The first direction may extend partially upwards.

The mount is in particular permanently fixed, e.g. sewn, to the dorsal section. It is also conceivable that the mount is releasably fixed to the dorsal section, e.g. by a hook-and-loop fastener.

For example, the base plate has a width in the transverse direction of at least 25 mm, and/or of at most 50 mm, in particular of at most 35 mm; and/or wherein the base plate has a length in the longitudinal direction of the mount of at least 40 mm, in particular of at least 45 mm, and of at most 60 mm, in particular of at most 50 mm.

For above mentioned purpose, further a hand garment is provided. The hand garment comprises a dorsal section configured to cover at least parts of the dorsum of a user's hand, a fastening section configured to fasten the dorsal section on the dorsum of the user's hand, and a mount for mounting a detachable wearable interface unit to the dorsal section. The mount is permanently fixed to the dorsal section and comprises a base plate and at least two fixation wings. The fixation wings extend from opposite edges of the base plate in a first direction and define a receiving space for the interface unit between them, the receiving space being fully open towards the rear. The base plate has a width in the transverse direction of at least 25 mm, and/or of at most 50 mm, in particular of at most 35 mm; and/or wherein the base plate has a length in the longitudinal direction of the mount of at least 40 mm, in particular of at least 45 mm, and of at most 60 mm, in particular of at most 50 mm. This way, the base plate is small without limiting the volume of the interface unit, as the interface unit may extend further than the base plate, e.g. to the rear.

In an aspect, the opposite edges of the base plate from which the fixation wings extend are lateral edges of the base plate and/or that the first direction is a transverse direction, simplifying mounting of the interface unit further.

In particular lateral is to be understood with respect to the transverse direction.

In an embodiment, the fixation wings extend from less than 80%, in particular less than 70% of the respective edge of the base plate; and/or the fixation wings extend at most 10 mm, in particular at most 6 mm above the base plate.

For example, a distance between the fixation wings and the front edge of the base plate is between 12 mm and 18 mm, in particular it is 15 mm.

For a very reliable fixation, each fixation wing may comprise a first portion and a second portion, wherein the first portion is attached to the edge of the base plate, the second portion extends from the first portion in a second direction, and the second portion may have a free end, in particular wherein the distance in the transverse direction between the free ends of opposing fixation wings is larger than the width of the base plate.

In an aspect, the first portion has a first curvature and the second portion has a second curvature, in particular wherein the second curvature is larger than the first curvature, further increasing the stability of the fixation wings without increasing their height.

For further improved functional volume, the receiving space may have a width in the transverse direction of at least 35 mm, and/or of at most 60 mm, in particular of at most 45 mm.

For example, the base plate extends proximally from the distal end of the dorsal section, allowing to further decrease the size of the dorsal section.

In an embodiment attachment lines, in particular one or more seams, are used to permanently attach the base plate to the dorsal section, wherein the attachment lines extend substantially in the longitudinal direction of the mount, wherein the distance between the attachment lines in the transverse direction is smaller than the width of the receiving space in the transverse direction. This way, any feeling of restraint by the hand garment is further reduced.

In order to reliably fasten the hand garment to the user's hand, the fastening section may comprise a portion extending across the palm of the user's hand, in particular a palmar section of a glove or one or more straps.

In an aspect, the top surface of the base plate is flat and/or free of protrusions, reducing the complexity of the base plate.

The base plate may have rips on the bottom side extending in the longitudinal direction, in particular along at least 30%, in particular at least 75% of the length of the base plate. The ribs increase the comfort for the user.

In an embodiment, the mount comprises a release element extending from a distal end of the base plate at least partially upwards, in particular wherein the release element has a length in the longitudinal direction of at most 20 mm, in particular at most 18 mm; a length in the longitudinal direction of at least 14 mm; a height above the base plate of more than or equal to 1 mm; and/or a height above the base plate of at less than or equal to 2 mm. This way, a simple and reliable way of releasing the interface unit is provided.

For simplicity, the rear or proximal end of the base plate may be free of elements of the mount extending upwards.

The end is in particular the edge of the base plate.

The receiving space may be limited distally, i.e. to the front, by the release element. The receiving space may be limited proximally, i.e. to the rear, by the proximal edge of the base plate.

In an aspect, the base plate comprises at least one receiving opening for receiving a tongue of the interface unit, wherein the receiving opening is located to the front of the fixation wings. This allows release of the interface unit by bending the base plate down.

In order to simplify the use of the interface unit, the hand garment may comprise an actuating element, which serves as an input means for the interface unit, in particular wherein the actuating element is part of an actuating section of the hand garment.

For example, the hand garment comprises at least one electric contact accessible from the receiving space, wherein the at least one electric contact is electrically connected with the actuating element. This way, an electrical connection is ensured when the interface unit is mounted in the mount.

The ate least one electric contact may extend through base plate into the receiving space or may be accessible through the base plate.

The electrical connection may be provided via a conductor integrated in the dorsal section and/or the actuation section.

The at least one electric contact may be provided at the proximal end of the base plate.

For above mentioned purpose, a wearable system is further provided comprising an interface unit and a mount for the interface unit, in particular a hand garment with a mount as described above. The mount comprises a base plate and at least two fixation wings extending from opposite edges of the base plate and defining a receiving space for the interface unit between them. The interface unit comprises a housing with at least two grooves, the grooves extend inwards and are being located opposite to each other exclusively in the lower third of the housing. The fixation wings engage in the grooves when the interface unit is received in the receiving space. Due to the very low placement of the grooves in the housing, the functional volume of the housing is kept large.

The features and advantages described with respect to the hand garment also apply to the wearable system and vice versa.

The housing may be in contact with the base plate when the interface unit is mounted in the mount. In particular, each of the fixation wings engages in one of the grooves.

For further improved functional volume, the grooves may be positioned exclusively in the lower quarter of the housing.

In an embodiment, the width of the housing is larger than the width of the base plate, and/or larger than the width of the receiving space; and/or the length of the housing is larger than the length of the base plate and/or larger than the length of the receiving space. This way, the functional volume is increased further.

In particular, the width of the housing is larger than the width of the base plate in an orthogonal projection into the plane of base plate or spanned by the transversal and longitudinal direction

Further for above mentioned purpose, a wearable system is provided. The wearable system comprising an interface unit and a mount for the interface unit, in particular a hand garment with a mount as described above. The mount comprises a base plate and at least two fixation wings extending from opposite edges of the base plate and defining a receiving space for the interface unit between them. The interface unit comprises a housing with at least two grooves. The width of the housing is larger than the width of the base plate and/or larger than the width of the receiving space; and/or the length of the housing is larger than the length of the base plate and/or larger than the length of the receiving space. By these means, the available functional volume of the housing is increased further.

The features and advantages described with respect to the hand garment also apply to the wearable system and vice versa.

In particular, in an orthogonal projection into the plane of base plate or spanned by the transversal and longitudinal direction, the width of the housing is larger than the width of the base plate.

In an aspect, the width of the entire interface unit is larger than the width of the receiving space, in particular in the orthogonal projection into the plane of base plate or spanned by the transversal and longitudinal direction. This way, the available functional volume of the housing is increased even further.

In order to keep the reduction in functional volume very low, each of the grooves may extend inwardly less than 10%, in particular less than 5% of the width of the housing in the transverse direction and/or they may extend less than 4 mm, in particular less than 3 mm inwards; and/or the average height of each of the grooves may be smaller than 4 mm, in particular less than 3 mm.

For ease of mounting, the housing may have a rear end, wherein the grooves may be open towards the rear end, in particular wherein the grooves widen upwardly at the rear end and/or tilt upwardly at the rear end.

In an aspect, the grooves are straight, in particular the grooves extend parallel to the base plate when the interface unit is fully mounted in the mount. This way, the wearable system is more sturdy.

In an embodiment, the housing comprises a housing base part and at least one housing top part, wherein the housing base part comprises the grooves and the housing base part is received in the receiving space, allowing for a variety of housing top parts to be used with the mount.

The housing top part is, for example, attached to housing base part. The housing top part may be wider than the housing base part

For example, the housing and/or the housing base part has two side faces, in particular lateral side faces, wherein the grooves are located in the side faces. This allows an intuitive mounting motion in the longitudinal direction of the hand.

For example, each groove is located in one of the side faces and/or the side faces are opposed to each other.

In an embodiment, the interface unit comprises at least one button, wherein the button is located above one of the grooves, wherein the at least one button and the respective groove are located on a same side of the housing, in particular on the same side face of the housing, in particular wherein the button is located above the fixation wings when the interface unit is received in the receiving space. One or more buttons allows a more versatile usage of the interface unit.

In particular, the buttons are unobstructed by the fixation wings when the interface unit is fully mounted.

For effectively limiting movement rearwards, the housing may comprise an end stop limiting the grooves, in particular limiting the grooves to the front.

In an aspect, the geometry of the housing below the grooves is complementary to the geometry of the first portion of the respective fixation wing. This way, a very sturdy fit of the interface unit in the mount is achieved.

In an embodiment, the interface unit comprises a wireless communication module, a code reader, a battery, electric contacts, and/or a display, further broadening the functionality of the interface unit.

The battery may be located in the housing of the interface unit. In an embodiment, the interface unit comprises a casing for the battery, wherein the battery is located inside the casing.

It is conceivable that there is a padding material located in the casing between the battery and the walls of the casing, in order to reduce mechanical shocks on the battery and on parts adjacent to the battery.

The padding material may be a plastic foam, like a polymeric foam. For example, the padding material is encasing the battery fully.

The casing is located inside the housing. It may be rigidly fastened to the housing, in particular to the housing base part, for example by screws, adhesive and/or via welding, e.g. ultrasonic welding.

The casing is in particular made of a rigid material, for example plastics or sheet metal.

In an embodiment, the interface unit comprises dampening members for the code reader within the housing. The code reader is fixed in the housing via the dampening members.

For example, the interface unit comprises a frame to which the code reader is fixed. The frame may be fixed in the housing. For example, the code reader is fixed in the frame by at least one first dampening member and/or the frame is fixed in the housing by at least one second dampening member.

In particular, the fixation of the code reader in the frame and/or the fixation of the frame in the housing is solely provided by the at least one first dampening member and the at least one second dampening member, respectively. The frame and/or the code reader are thus floatingly fixed.

The at least one first dampening member and/or the at least one second dampening member may be made from one or more of liquid silicon rubber, vulcanized silicon, injection molded rubber, rigid foam or gel pad.

In an embodiment, the electric contacts may be integrated into the housing base part. For example, the electric contacts are over molded pins, e.g. the electric contacts are inserted into the molding tool of the housing base part and are then overmolded by the material that forms the housing base part.

For example, the interface unit comprises six electric contacts, in particular which are arranged in a line.

In addition or alternatively, at least one of the electric contacts is configured as a power output pin to provide electric energy from the interface unit's battery.

For example, the interface unit is configured to provide power output of 0.5 W or more, in particular of 1.0 W or more, and more particular of 1.5 W or more.

In addition or alternatively, at least one of the electric contacts is configured to serve as a pin for a Universal Serial Bus (USB) interface or as a pin for a universal asynchronous receiver / transmitter (UART) interface. The type of interface provided by this at least one electric contact is selected and configured by the control unit of the interface unit.

It is conceivable in an embodiment, that some of the components of the interface unit (e.g. the code reader, the control unit, the wireless communication module, the display, the buttons and the electric contacts) are located in and/or attached to the housing top part and the other components are located in and/or attached to the housing base part before the attachment of the housing top part to the housing base part.

Thus, during assembly, the components located in the housing top part have to be electrically connected to the components located in the housing base part. To simplify assembly, the interface unit may comprise an electric interface between the components located in the housing top part and the components located in the housing base part, the interface comprising elastic contacts, e.g. spring fingers, on one side and contact areas on the other side.

For example, one, some or all of the components located in the housing top part are electrically connected to the elastic contacts and one, some or all of the components located in the housing base part are electrically connected to the contact areas, or vice versa. The arrangement of the elastic contacts and the contact area is such that when attaching the housing top part to the housing base part, the elastic contacts physically contact the contact areas, establishing an electric connection between the respective components located in the housing top part and the respective components located in the housing base part.

For securely fixating the interface unit, the housing of the interface unit may comprise at least one tongue protruding downwards, and the base plate of the mount may comprise at least one receiving opening, wherein the receiving opening is located to the front of the fixation wings, wherein the at least one tongue is engaged in the at least one receiving opening when the interface unit is mounted on the mount.

In an embodiment, the housing of the interface unit, in particular the housing base part, comprises two lateral lower edges, wherein the lateral lower edges have a rounded contour and/or have a curvature, in particular along their full length. By rounding the lateral lower edges, the hand of the user below the interface unit is given more space for movement, further increasing the comfort for the user.

Further features and advantages will be apparent from the following description as well as the accompanying drawings, to which reference is made. In the drawings:
- Fig. 1: shows a schematic view of a shop floor with workers using a wearable system according to an embodiment of the invention with a hand garment according to an embodiment of the invention,
- Fig. 2: a hand garment and a wearable system of Figure 1 in a more detailed schematic view,
- Figs. 3, 4: the interface unit of the wearable system of Figure 2 in a perspective view onto the top and bottom, respectively,
- Figs. 5, 6: a top view and a sectional view, respectively, of a mount of the wearable system and the hand garment of Figure 2,
- Figs. 7, 8: a side view and a sectional view, respectively, of the interface unit of Figure 3 when mounted in the mount of Figure 5,
- Fig. 9: a perspective view of a frame of an interface unit according to an embodiment of the invention in isolation, and
- Fig. 10: a schematic sectional view through the casing and the battery of an interface unit according to an embodiment of the invention.

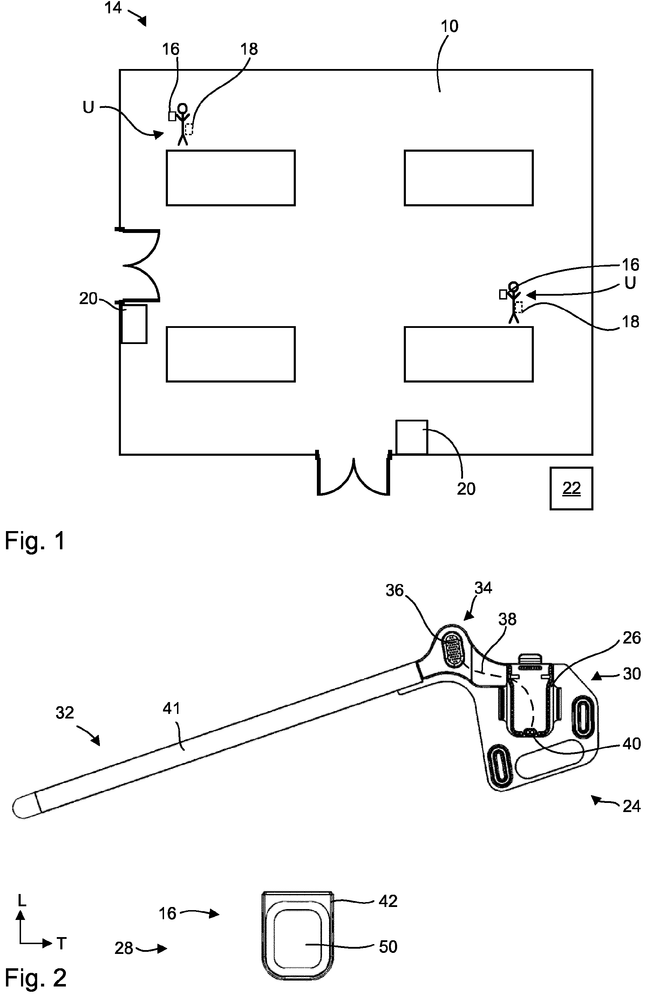

Figure 1 shows a schematic view of a shop floor 10, e.g. a warehouse or a manufacturing plant having a plurality of workstations, shelves or other places to carry our tasks.

A system 14 is used on the shop floor 10 comprising a plurality of interface units 16, connectivity devices 18, a plurality of stationary devices 20, and a system control 22.

The system control 22 controls the system 14 and is, for example, an application running on a server (single server or distributed server), like a cloud server or a server on premise.

The system control 22 comprises, for example, a server (single server or distributed server) on which a software for controlling the interface unit 16 and the connectivity devices 18 is executed, and/or a server (single server or distributed server) on which a software receiving data obtained by the interface units 16 is executed such as an enterprise resource planning system (ERP system). Both servers may be a local server or a cloud server. It is also conceivable that the software for controlling the interface units 16 and the connectivity devices 18 and the software receiving data obtained by the interface units 16 are executed on the same server.

The system control 22 may have an interface, like a dashboard, to provide information to a supervising user.

The connectivity device 18 is a wearable smart device, preferably a smartphone. However, the connectivity device 18 can also be, for example, a tablet, a laptop, a smart watch or smart glasses.

The stationary devices 20 are fixedly positioned at certain places of the shop floor 10 and are connected to the system control 22.

Either the connectivity devices 18 or the stationary device 20 are optional.

The interface units 16 and the connectivity devices 18 are carried by users U, e.g. workers working on the shop floor 10.

To his end, the system 14 comprises hand garments 24 with a mount 26 for detachably mounting the interface unit 16 to the hand of the user U. The hand garment 24 is worn by the user U.

The interface unit 16 is thus a wearable interface unit 16, and the interface unit 16 and the mount 26, e.g. the hand garment 24 including the mount 26, form a wearable system 28 according to the invention.

For example, each user U carries one connectivity device 18 and one or more interface units 16.

It is also conceivable that the interface unit 16 is a stand-alone device.

Figure 2 shows schematically a wearable system 28 in an unworn state with the hand garment 24 and one of the interface units 16.

The hand garment 24 of this example is a glove or a glove-like garment as described in DE 10 2021 126 552 A1 or US 2023/0112442 A1.

The hand garment 24 and with that the mount 26 and the interface unit 16 have a transverse direction T and a longitudinal direction L.

In the shown example, the transverse direction T extends in the transverse direction of the user's hand, when the hand garment 24 is being worn.

The longitudinal direction L is perpendicular to the transverse direction T and corresponds to the longitudinal direction of the user's hand, i.e. the direction of the fingers of an outstretched hand.

It is also conceivable that the transverse direction T extends in the longitudinal direction of the user's hand, and that the longitudinal direction L corresponds to the transverse direction of the user's hand.

The hand garment 24 comprises the mount 26 with a receiving space 29, a dorsal section 30, a fastening section 32, an actuating section 34, an actuating element 36, a conductor 38, and electric contacts 40.

The dorsal section 30 is located on the back of the hand (dorsum) of the user U when the hand garment 24 is being worn and covers at least parts of the dorsum.

In the shown embodiment, the actuating section 34 extends from the dorsal section and covers the metacarpophalangeal joint of the index finger of the hand of the user U when the hand garment 24 is being worn.

It is conceivable that the actuating section 34 is located at a different part of the user's hand when the hand garment 24 is being worn.

The fastening section 32 extends from the dorsal section 30 or, as in the shown example, from the actuating section 34. The fastening section 32 extends at least partly along the palm of the hand of the user U and attaches detachably to the dorsal section 30 or the actuating section 34 when the hand garment 24 is being worn. As such, the fastening section 32 fastens the dorsal section 30 at the back of the user's hand.

To this end, the fastening section 32 comprises a strap 41 extending across the palm of the user's hand. In cases that the hand garment 24 is a glove, the fastening section 32 may be the palmar section of the glove.

The actuating element 36 may be a push button or a capacitive sensor and is located in or at the actuating section 34. In the shown embodiment, the actuating element 36 is thus positioned at the index finger or the metacarpophalangeal joint of the index finger of the user's hand when the hand garment 24 is being worn.

The actuating element 36 is connected to the electric contacts 40 via the conductor 38, for example one or more cables or a flex-PCB integrated into the actuating section 34 and the dorsal section 30.

The electric contacts 40 are accessible from the receiving space 29.

The mount 26 is permanently fixed to the dorsal section 30, for example by sewing, and it is configured to receive the interface unit 16 in the receiving space 29.

It is also conceivable that the mount 26 is releasably fixed to the dorsal section, e.g. by a hook-and-loop fastener.

When mounted in the mount 26, the interface unit 16, more precisely electric contacts of the interface unit 16, contact the electric contacts 40 on the dorsal section 30 so that the actuating element 36 is electrically connected to the interface unit 16.

When the hand garment 24 with the mounted interface unit 16 is worn by the user U, the user U can easily activate the interface unit 16 by actuating the actuating element 36 with the thumb.

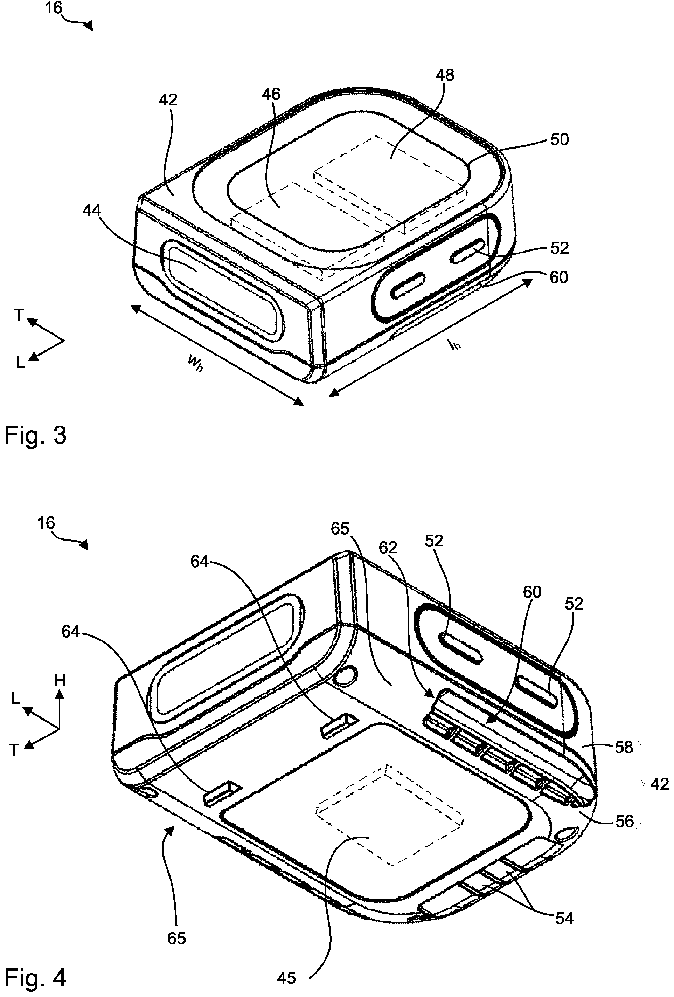

The interface unit 16 is shown in a perspective view onto the top and bottom in Figure 3 and 4, respectively.

The interface unit 16 comprises, in the shown embodiment, a housing 42, a code reader 44, a battery 45, a control unit 46, a wireless communication module 48, a display 50, a casing 51 for the battery 45, two buttons 52, a frame 53, and electric contacts 54.

The interface unit 16 is thus a scanning and information device.

It is conceivable that the interface unit 16 does not comprise a code reader or display. In these cases, the interface unit 16 is an information device or a scanning device, respectively.

The interface unit 16 may provide haptic, visual and/or audible feedback by respective components, e.g. one or more LEDs and/or a speaker.

The code reader 44, the control unit 46 and the wireless communication module 48 are located within the housing 42.

The control unit 46 and the code reader 44 may be formed as a single part, or a part of the code reader 44, for example a decoder, is integrated into the control unit 46.

The code reader 44 (also called scan engine), which may comprise a camera and a decoder, is an optical code reader 44 configured to read machine-readable codes, like barcodes, two-dimensional codes, for example QR codes, data matrix codes or the like, or any other optical machine-readable code.

It is also conceivable that the code reader 44 is another type of code reader, for example for reading RFID-tags.

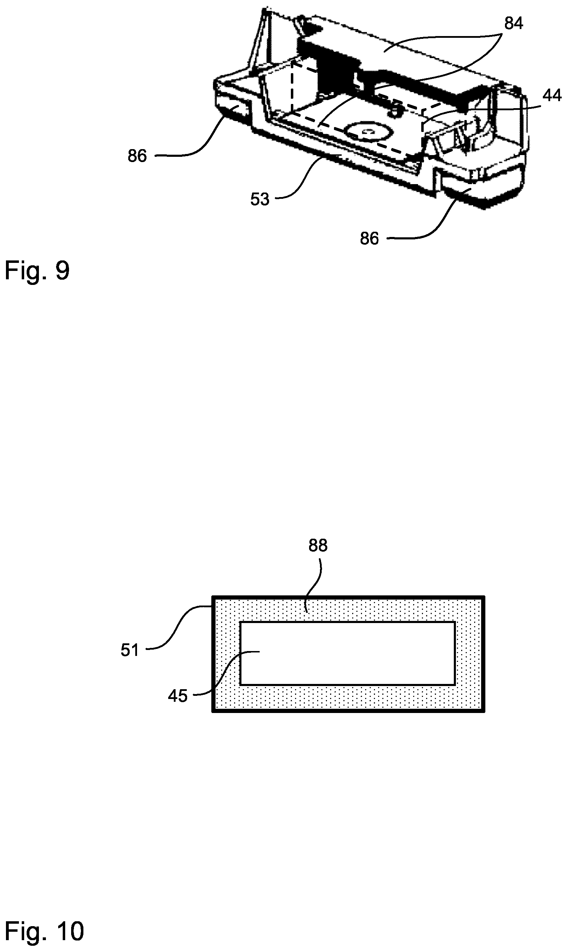

For example, the code reader 44 is fixed in the frame 53, and the frame 53 is fixed in the housing 42, as can be seen in Figure 9 showing the frame 53 in isolation, wherein the code reader 44 is indicated in dashed lines.

To this end, the interface unit 16 may comprise dampening members 84, 86, for example a first dampening member 84 and a second dampening members 86. The code reader 44 is fixed in the frame 53 by the first dampening member 84 and the frame 53 is fixed in the housing 42 by two second dampening member 86. Thus, in this specific context, "fixed" does not mean "rigidly fixed" as the dampening members allow small movements of the components fixed therewith.

In particular, the fixation of the code reader 44 in the frame 53 and/or the fixation of the frame 53 in the housing 42 is solely provided by the dampening members 84, 86.

The dampening members 84, 86 may be made from liquid silicon rubber, vulcanized silicon, injection molded rubber, rigid foam and/or gel pads.

The wireless communication module 48 is configured to establish a wireless communication connection with the connectivity device 18 or the stationary device 20. The wireless communication module 48 is, for example, a Bluetooth module, in particular a Bluetooth low energy (BLE) module, e.g. for communicating wirelessly under the Bluetooth or BLE Standard.

The battery 45 may be located in the housing 42 of the interface unit 16, more particularly in the casing 51, as can be seen schematically in Figure 10.

Further, there may be a padding material 88 located in the casing 51 between the battery 45 and the walls of the casing 51, in order to reduce mechanical shocks on the battery 45 and on components adjacent to the battery 45.

The padding material 88 may be a plastic foam, like a polymeric foam, and it encases the battery 45 fully.

The casing 51 is located inside the housing 42. It may be rigidly fastened to the housing base part 56 or the housing top part 58, for example by screws, adhesive and/or via welding, e.g. ultrasonic welding.

The casing 51 is in particular made of a rigid material, for example plastics or sheet metal.

In an embodiment, the electric contacts 54 may be integrated into the housing base part 56. For example, the electric contacts 54 are over molded pins, i.e. the electric contacts 54 are inserted into the molding tool of the housing base part 56 and then overmolded by the material forming the housing base part 56.

It is conceivable that in another embodiment, the interface unit 16 comprises six electric contacts 54, in particular which are arranged in a line.

In addition or alternatively, at least one of the electric contacts 54 is configured as a power output pin to provide electric energy from the interface unit's battery 45.

For example, the interface unit 16 is configured to provide power output of 0.5 W or more, in particular of 1.0 W or more, and more particular of 1.5 W or more.

In addition or alternatively, at least one of the electric contacts 54 is configured to be part of a Universal Serial Bus (USB) interface or part of a universal asynchronous receiver / transmitter (UART) interface. The type of interface provided by this at least one electric contact 54 is selected and configured by the control unit 46 of the interface unit 16.

During use of the system 10, the connectivity device 18 or the stationary device 20 provides a communication path between the interface unit 16 and the system control 22. For example, the connectivity device 18 or the stationary device receives from the interface unit 16 data obtained by the code reader 44, and relays the data and/or information based on the obtained data to the system control 22. Further, data and/or information may be relayed from the system control 22 to the interface unit 16, e.g. information to be shown on the display 50 of the interface unit 16.

The housing 42 of the interface unit 16 comprises, in particular consists of a housing base part 56 and a housing top part 58.

It is conceivable that the interface unit 16 comprises more than two, e.g. four, or only one button 52. The buttons 52 are, for example, push buttons.

The housing top part 58 rests on the housing base part 56. Of the total height of the housing 42, the housing base part 56 is about 1/3, in particular 1/4 and the housing top part 58 is about 2/3 or 3/4.

The display 50 is arranged at the top of the interface unit 16 and extends through the housing top part 58.

Further, the buttons 52 are located at a side face of the housing 42 in the housing top part 58.

The housing top part 58 is attached to the housing base part 56.

It is conceivable in an embodiment that some of the components of the interface unit 16 (e.g. the code reader 44, the control unit 46, the wireless communication module 48, the display 50, the buttons 52 and the electric contacts 54) are located in and/or attached to the housing top part 58 and the other of the components are located in and/or attached to the housing base part 56 before the attachment of the housing top part 58 to the housing base part 56.

Thus, during assembly, some of the components located in the housing top part 58 have to be electrically connected to some of the components located in the housing base part 56. To this end, the interface unit 16 may comprise an electric interface between the components located in the housing top part 58 and the components located in the housing base part 56. The interface comprises elastic contacts, e.g. spring fingers, on one side and contact areas on the other side.

For example, the components located in the housing top part 58 are electrically connected to the elastic contacts and the components located in the housing base part 56 are electrically connected to the contact areas, or vice versa.

The arrangement of the elastic contacts and the corresponding contact areas is such that when correctly attaching the housing top part 58 to the housing base part 56, the elastic contacts automatically physically contact the contact areas, establishing an electric connection between the respective components located in the housing top part 58 and the respective components located in the housing base part 56.

The housing 42 has a width wₕ in the transverse direction T and a length lₕ in the longitudinal direction L.

The width wₕ of the housing 42 in the transverse direction T is at least 25 mm, in particular at least 35 mm, more particular at least 50 mm, even more particular at least 60 mm.

In the shown example, the housing base part 56 and the housing top part 58 have the same width being the width wₕ of the housing 42 itself.

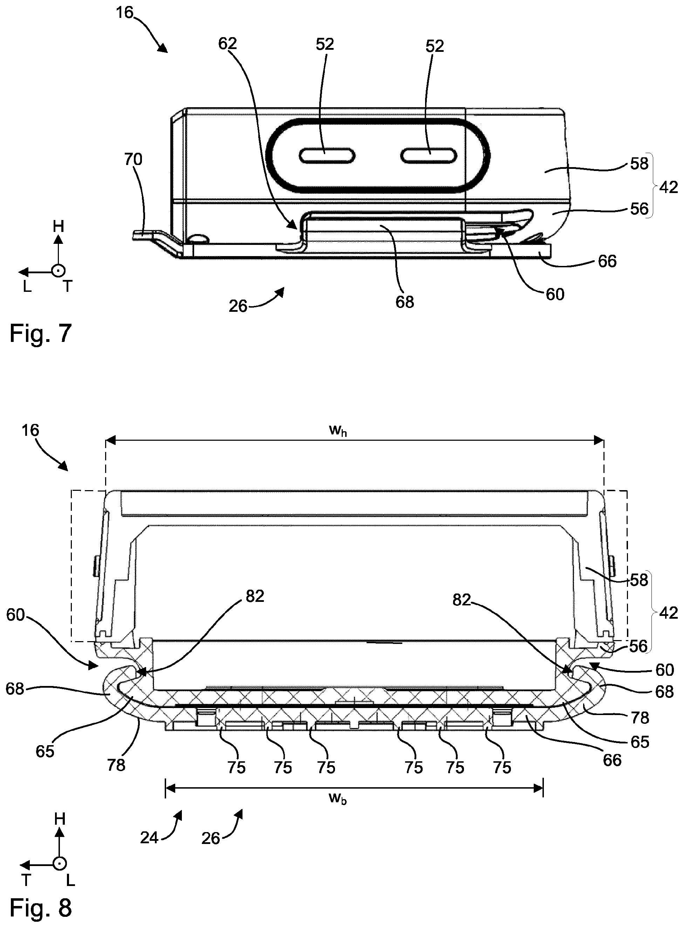

It is conceivable, that the housing top part 58 has a larger width than the housing base part 56, as indicated with dashed lines in Figure 8.

In this case, the width wₕ of the housing 42, is then the width of the housing top part 58.

In the shown example, the width of the entire interface unit 16 is the width wₕ of the housing.

The housing 42 has a front surface through which the code reader 44 operates. At the rear, the corners of the housing 42 are rounded, and the lower lateral edges of the housing base part 56 are rounded.

The housing 42 comprises two grooves 60 at opposite side faces, in the shown example an opposite lateral side faces of the housing 42. At each of the side faces, one of the grooves 60 is located.

The grooves 60 are located fully in the lower third, in particular the lower quarter of the housing.

Directional terms like "upper", "lower" and the like are to be understood with respect to the height direction H of the interface unit 16, whereas the direction towards the mount 26 is downwards.

The grooves 60 are located fully within the housing base part 56 and extend from the rear of the housing 42 towards the front in a straight line.

The grooves 60 extend from the rear end forward to a maximum of three quarters, in particular to a maximum of 2/3 of the length lₕ of the housing 42.

The grooves 60 extend from the respective end face inwardly less than 10%, in particular less than 5% of the width wₕ of the housing 42 in the transverse direction T.

To the front, i.e. distally, the grooves 60 are limited by an end stop 62 of the housing 42. At the rear, i.e. proximally, the grooves 60 are open towards the rear. As such, the grooves 60 are open laterally as well as rearwards.

The height of the grooves 60 is constant across the majority of its extension in the transverse direction T, wherein the grooves 60 widen upwardly at the rear end, i.e. their height at the rear end is higher than in the middle, whereas, for example, the bottom of the grooves 60 are straight.

Further, the grooves 60 may differ from a straight line at their rear end, where they tilt upwards, e.g. between 6° to 14°, in particular by 10°.

The average height of each of the grooves 60 is smaller than 4 mm, in particular smaller than 3 mm.

With respect to the grooves 60, the buttons 52 are located on the same side of the housing 42 and above the respective groove 60.

The housing base part 56 further comprises two tongues 64 extending downwards. The tongues 64 are located in the front region of the housing 42, for example between the front end and the beginning of the grooves 60.

Further, the housing base part 56 comprises two lateral lower edges 65 extending in the longitudinal direction L. The lateral lower edges 65 are located below the grooves 60.

The lateral lower edges 65 have a rounded contour and/or have a curvature along their entire length.

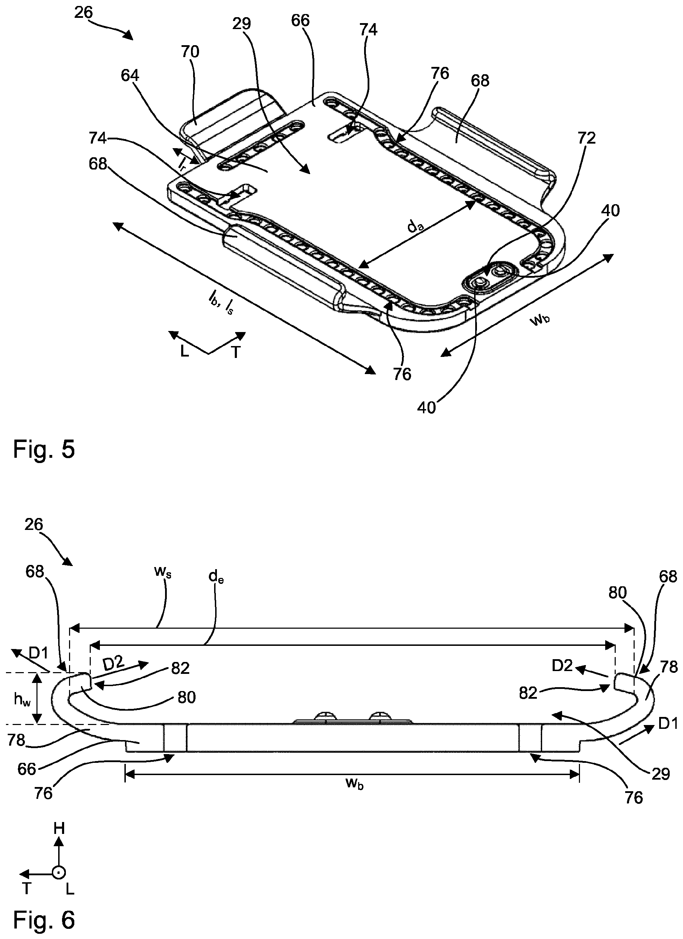

Figures 5 and 6 show the mount 26 in a top view and a sectional view, respectively.

The mount 26 comprises a base plate 66, and two fixation wings 68, and a release element 70.

The mount 26 is in particular manufactured as a single piece, e.g. by injection molding or 3D-printing.

The top surface of the base plate 66 is, in the shown example, flat and free of protrusions.

It is conceivable that the base plate 66 comprises steps, a curvature, different layers or protrusions.

The base plate 66 comprises a contact opening 72 at its rear end through which the electric contacts 40 (shown in dashed lines in Figure 5) extend into the receiving space 29.

Further, the base plate 66 has two receiving openings 74 for receiving the tongues 64 of the interface unit 16 when the interface unit 16 is mounted in the mount 26.

The receiving openings 74 are thus located at the front of the base plate 66, for example the receiving openings 74 are located in the longitudinal direction L between the beginning of the fixation wings 68 and the front edge of the base plate 66.

It is conceivable, that the tongues 64 of the interface unit 16 and the receiving openings 74 are functionally reversed, i.e. that the interface unit 16 comprises receiving openings and that the base plate 66 comprises tongues.

The base plate 66 has a width w_{b} in the transverse direction T and a length l_{b} in the length direction L.

The width w_{b} of the base plate 66 is at least 25 mm, and/or at most 50 mm, in particular at most 35 mm.

The length l_{b} of the base plate 66 in the longitudinal direction L is at least 40 mm, in particular at least 45 mm, and at most 60 mm, in particular at most 50 mm.

The base plate 66 further has ribs 75 (Fig. 8) on the bottom side. The ribs 75 extend in the longitudinal direction L along at least 30%, in particular at least 75% of the length l_{b} of the base plate 66.

The base plate 66 is fixed to the dorsal section 30 by two attachment lines of the hand garment 24. In the shown embodiment, the attachment lines are seams which extend through the dorsal section 30 and holed lines 76 of the base plate 66.

A third attachment line is provided at the front of the base plate 66 in the shown example.

It is conceivable, that a single seam is used to provide two attachment lines, e.g. a single seam extending through the holes of the holed line 76 and through the dorsal section 30.

It is also conceivable, that the attachment lines are lines of adhesive, for example a hot melt.

The attachment lines, in Figure 5 the holed lines 76, extend primarily in the longitudinal direction L and are spaced apart by a distance dₐ which is smaller than the width w_{b} of the base plate 66.

With respect to the dorsal section 30, the base plate 66 extends from the distal end of the dorsal section 30, e.g. the edge of the dorsal section 30 closest to the fingers. The front edge of the base plate 66 coincides with the distal edge of the dorsal section 30.

From the distal edge, the base plate 66 extends in the longitudinal direction L proximally, i.e. towards the wrist of the user's hand.

The release element 70 extends from the front or distal end of the base plate 66. The release element 70 extends partially upwards, e.g. upwards and further distally or perpendicular upwards.

The release element 70 has a length lᵣ in the longitudinal direction L of at most 20 mm, in particular of at most 18 mm, an of at least 14 mm.

The height of the release element 70 above the base plate 66 is more than or equal to 1 mm, and/or less than or equal to 2 mm.

The proximal or rear end of the base plate 66 is free of elements of the mount 26 that extend upwards.

The ends of the base plate 66 are in particular the edges of the base plate 66.

The fixation wings 68 extend from opposite edges of the base plate 66. In the shown example, the fixation wings 68 extend from lateral edges of the base plate 66, i.e. edges of the base plate 66 extending fully or at least predominantly in the longitudinal direction L.

The fixation wings 68 do not extend along the entire respective edge of the base plate 66 they are attached to.

The fixation wings 68 extend from less than 80%, in particular less than 70% of the respective edge of the base plate 66. In the direction of the respective edge, the fixation wings 68 have a length of less than 80%, in particular less than 70% of the full length of the respective edge of the base plate 66.

The beginnings of the fixation wings 68 are spaced from the front edge of the base plate 66 by a distance between 12 mm and 18 mm, in particular of 15 mm.

The fixation wings 68 extend in a first direction D1 from the respective edge of the base plate 66. In the shown embodiment, the first direction corresponds to the transverse direction T of the mount 26 and interface unit 16, when projected orthogonally into the T-L plane, e.g. the plane of the base plate 66.

It is conceivable, that the first direction D1 does not correspond to the transverse direction T. In these cases, the first direction extends partially or in particular free dominantly in the transverse direction T in the orthogonal projection.

As best seen in Figure 6, the fixation wings 68 extend also partially upwards, having a height h_{w} above the base plate 66. The height h_{w} of the fixation wings 68 is at most 10 mm, in particular at most 6 mm.

For example, each of the fixation wings 68 comprises a first portion 78 and a second portion 80.

The first portion 78 has a first end which extends from the base plate 66.

The first portion 78 extends in the first direction D1, at least in the orthogonal projection into the plane of the base plate 66, and also upwards.

The first portion 78 has a first curvature and extends in the transverse direction T in the beginning, i.e. at the attachment point to the base plate 66.

The first portion merges at its second end with the first end of the second portion 80.

The second portion 80 extends in a second direction D2, e.g. from the first portion 78 towards the base plate 66 in the orthogonal projection.

The second portion 80 may also extend upwards or downwards.

Further, the second portion 80 may have a second curvature. The second curvature of the second portion 80 may be different from the first curvature of the first portion 78, in particular, the second curvature is larger than the first curvature.

The second end of the second portion 80 is a free end 82.

In the transverse direction T, the second portion 80 is shorter than the first portion 78, so that the free end 82 does not lie directly above the base plate 66, i.e. in the orthogonal projection the free ends 82 and the base plate 66 are spaced the part.

The distance dₑ between the free ends 82 in the transverse direction T is larger than the width w_{b} of the base plate 66.

The receiving space 29 of the mount 26 is defined to the front or distally in the longitudinal direction L by the release element 70. Proximally or towards the rear, the rear edge of the base plate 66 defines the receiving space 29, but the receiving space 29 is fully open towards the rear, e.g. the cross section of the receiving space 29 at the rear edge of the base plate 66 is not reduced compared to a cross section further to the front.

In the transverse direction T the receiving space 29 is confined by the fixation wings 68.

The width wₛ of the receiving space 29 is the largest distance between corresponding portions of the opposing fixation wings 68 in the transverse direction T. At any point in the longitudinal direction L of the receiving space 29, the width wₛ of the receiving space 29 is larger than the width w_{b} of the base plate 66.

The width wₛ of the receiving space 29 is at least 35 mm and at most 60 mm, in particular at most 45 mm.

In relation to the dimensions of the interface unit 16, in particular its housing 42, the width wₕ of the housing 42 of the interface unit 16 is larger than the width w_{b} of the base plate 66 and larger than the width wₛ of the receiving space 29.

The housing 42 may extend beyond the receiving space 29 in the transverse direction T and/or the longitudinal direction L.

For mounting the interface unit 16 in the mount 26, the interface unit 16 is inserted into the receiving space 29 from the front of the receiving space 29. To this end, the rear end of the interface unit 16 is moved from the front of the base plate 66 to the rear so that the fixation wings 68, in particular the free ends 82 of the second portions 80, engage in the grooves 60 of the housing 42 of the interface unit 16.

Each of the fixation wings 68 engages in one of the grooves 60.

The interface unit 16 is moved until the fixation wings 68 hit the end stops 62 of the grooves 60. Further rearwards movement of the interface unit 16 is thus inhibited by the end stops 62.

At that time, each of the tongues 64 of the interface unit 16 engages in the respective one of the receiving openings 74, which inhibits movement of the interface unit 16 to the front.

Upward and downward movement of the interface unit 16 is inhibited by the fixation wings 68 and the base plate 66, respectively.

Thus, the interface unit 16 is fully and securely mounted on the mount 26.

This situation is shown in Figures 7 and 8, wherein Figure 7 shows a side view and Figure 8 a sectional view.

As can be seen in Figure 7, the bottom surface of the housing 42, in particular of the housing base part 56 is in contact with the base plate 66 of the mount 26 and the buttons 52 of the interface unit 16 are located above the fixation wings 68. Thus, the buttons 52 are unobstructed by the fixation wings 68 and can still be operated easily.

As can be seen in Figure 8, the fixation wings 68 fit snugly around the housing base part 56, in particular the geometry of the housing base part 56 below the grooves 60, e.g. of the lateral lower edges 65, is complementary to the geometry of the first portion 78 of the respective fixation wings 68.

For example, the contour of the lateral lower edges 65 of the housing base part 56 has the same first curvature as the first portion 78 of the fixation wings 68.

This way, the interface unit 16 is securely fastened to the hand garment 24. At the same time, the size of the interface unit 16 is not restricted by the size of the receiving space 29 thus the baseplate may be held small, improving the comfort and ergonomics for the user U.

Further, the interior volume of the housing 42, i.e. the functional volume available for electronics, is impacted very little by the way of mounting the interface unit 16, as the grooves 60 are located very low and are very shallow. As such, the grooves 60 and the fixation wings 68 do not eat into the housing 42, allowing a large functional volume.

For releasing and dismounting the interface unit 16 from the mount 26, the release element 70 is pressed downwards, bending the base plate 66. The tongues 64 disengage from the receiving openings 74 and the interface unit 16 may be moved to the front.

Once the interface unit 16 has been moved to the front to the amount that the fixation wings 68 have disengaged from the grooves 60 of the housing 42, the interface unit 16 can be detached from the mount 26.

## Claims

1. Hand garment comprising a dorsal section (30) configured to cover at least parts of the dorsum of a user's hand, a fastening section (32) configured to fasten the dorsal section (30) on the dorsum of the user's hand, and a mount (26) for mounting a detachable wearable interface unit (16) to the dorsal section (30),
wherein the mount (26) is fixed to the dorsal section (30) and comprises a base plate (66) and at least two fixation wings (68),
wherein the fixation wings (68) extend from opposite edges of the base plate (66) in a first direction (D1) and define a receiving space (29) for the interface unit (16) between them, and
wherein the width (wₛ) of the receiving space (29) is larger than the width (w_{b}) of the base plate.

2. Hand garment comprising a dorsal section (30) configured to cover at least parts of the dorsum of a user's hand, a fastening section (32) configured to fasten the dorsal section (30) on the dorsum of the user's hand, and a mount (26) for mounting a detachable wearable interface unit (16) to the dorsal section (30),
wherein the mount (26) is fixed to the dorsal section (30) and comprises a base plate (66) and at least two fixation wings (68),
wherein the fixation wings (68) extend from opposite edges of the base plate (66) in a first direction (D1) and define a receiving space (29) for the interface unit (16) between them, wherein the receiving space (29) is fully open towards the rear, and
wherein the base plate (66) has a width (w_{b}) in the transverse direction (T) of the mount (26) of at least 25 mm, and/or of at most 50 mm, in particular of at most 35 mm; and/or wherein the base plate (66) has a length (l_{b}) in the longitudinal direction (L) of the mount (26) of at least 40 mm, in particular of at least 45 mm, and of at most 60 mm, in particular of at most 50 mm.

3. Hand garment according to claim 2, **characterized in that** the width (wₛ) of the receiving space (29) is larger than the width (w_{b}) of the base plate.

4. Hand garment according to any of the preceding claims, **characterized in that** the opposite edges of the base plate (66) from which the fixation wings (68) extend are lateral edges of the base plate (66) and/or that the first direction (D1) is a transverse direction (T); and/or
**in that** the fixation wings (68) extend from less than 80%, in particular less than 70% of the respective edge of the base plate (66); and/or that the fixation wings (68) extend at most 10 mm, in particular at most 6 mm above the base plate (66).

5. Hand garment according to any of the preceding claims, **characterized in that** each fixation wing (68) comprises a first portion (78) and a second portion (80), wherein the first portion (78) is attached to the edge of the base plate (66), the second portion (80) extends from the first portion (78) in a second direction (D2), and the second portion (80) has a free end (82), in particular wherein the distance (dₑ) in the transverse direction (T) between the free ends (82) of opposing fixation wings (68) is larger than the width (w_{b}) of the base plate (66); in particular
wherein the first portion (78) has a first curvature and that the second portion (80) has a second curvature, in particular wherein the second curvature is larger than the first curvature.

6. Hand garment according to any of the preceding claims, **characterized in that** the receiving space (29) has a width (wₛ) in the transverse direction (T) of at least 35 mm, and/or of at most 60 mm, in particular of at most 45 mm; and/or
**in that** attachment lines, in particular one or more seams, are used to permanently attach the base plate (66) to the dorsal section (30), wherein the attachment lines extend substantially in the longitudinal direction (L) of the mount (26), wherein the distance (dₐ) between the attachment lines in the transverse direction (T) is smaller than the width (wₛ) of the receiving space (29) in the transverse direction (T).

7. Hand garment according to any of the preceding claims, **characterized in that** the fastening section (32) comprises a portion extending across the palm of the user's hand, in particular a palmar section of a glove or one or more straps.

8. Hand garment according to any of the preceding claims, **characterized in that** the top surface of the base plate (66) is flat, is free of protrusions, and/or extends proximally from the distal end of the dorsal section (30); and/or
**in that** the mount (26) comprises a release element (70) extending from a distal end of the base plate (66) at least partially upwards, in particular wherein the release element (70) has a length in the longitudinal direction (L) of at most 20 mm, in particular at most 18 mm; a length in the longitudinal direction (L) of at least 14 mm; a height above the base plate (66) of more than or equal to 1 mm; and/or a height above the base plate (66) of at less than or equal to 2 mm; and/or
**in that** the proximal end of the base plate (66) is free of elements of the mount (26) extending upwards; and/or
**in that** the base plate (66) comprises at least one receiving opening (74) for receiving a tongue (64) of the interface unit (16), wherein the receiving opening (74) is located in front of the fixation wings (68).

9. Hand garment according to any of the preceding claims, **characterized in that** the hand garment (24) comprises an actuating element (36), which serves as an input means for the interface unit (16), in particular wherein the actuating element (36) is part of an actuating section (34) of the hand garment (24), in particular
wherein the hand garment (24) comprises at least one electric contact (40) accessible from the receiving space (29), wherein the at least one electric contact (40) is electrically connected with the actuating element (36).

10. Wearable system comprising an interface unit (16) and a mount (26) for the interface unit (16), in particular a hand garment (24) with a mount (26) according to any of the claims 1 to 9,
wherein the mount (26) comprises a base plate (66) and at least two fixation wings (68) extending from opposite edges of the base plate (66) and defining a receiving space (29) for the interface unit (16) between them,
wherein the interface unit (16) comprises a housing (42) with at least two grooves (60), the grooves (60) extend inwards and are being located opposite to each other in the lower third of the housing (42),
wherein the fixation wings (68) engage in the grooves (60) when the interface unit is received in the receiving space (29).

11. Wearable system according to claim 10, **characterized in that** the width (wₕ) of the housing (42) is larger than the width (w_{b}) of the base plate (66) and/or larger than the width (wₛ) of the receiving space (29); and/or **in that** the length (lₕ) of the housing (42) is larger than the length (l_{b}) of the base plate (66) and/or larger than the length (lₛ) of the receiving space (29).

12. Wearable system comprising an interface unit (16) and a mount (26) for the interface unit (16), in particular a hand garment (24) with a mount (26) according to any of the claims 1 to 9,
wherein the mount (26) comprises a base plate (66) and at least two fixation wings (68) extending from opposite edges of the base plate (66) and defining a receiving space (29) for the interface unit (16) between them,
wherein the interface unit (16) comprises a housing (42) with at least two grooves (60),
wherein the width (wₕ) of the housing (42) is larger than the width (w_{b}) of the base plate (66) and/or larger than the width (wₛ) of the receiving space (29); and/or wherein the length (lₕ) of the housing (42) is larger than the length (l_{b}) of the base plate (66) and/or larger than the length (lₛ) of the receiving space (29).

13. Wearable system according to any one of claim 10 to 12, **characterized in that** each of the grooves (60) extends inwardly less than 10%, in particular less than 5% of the width (wₕ) of the housing (42) in the transverse direction (T) and/or **in that** each of the grooves (60) extends inwardly less than 4 mm, in particular less than 3 mm; and/or **in that** the average height of each of the grooves (60) is smaller than 4 mm, in particular less than 3 mm.

14. Wearable system according to any one of claims 10 to 13, **characterized in that** the housing (42) has a rear end, wherein the grooves (60) are open towards the rear end, in particular wherein the grooves (60) widen upwardly at the rear end and/or tilt upwardly at the rear end; and/or
**in that** the housing (42) comprises a housing base part (56) and at least one housing top part (58), wherein the housing base part (56) comprises the grooves (60) and the housing base part (56) is received in the receiving space (29); and/or
**in that** the housing (42) and/or the housing base part (56) has two side faces, in particular lateral side faces, wherein the grooves (60) are located in the side faces; and/or
**in that** the interface unit (16) comprises at least one button (52), wherein the button (52) is located above one of the grooves (60), wherein the at least one button (52) and the respective groove (60) are located on a same side of the housing (42), in particular on the same side face of the housing (42), in particular wherein the button (52) is located above the fixation wings (68) when the interface unit (16) is received in the receiving space (29).

15. Wearable system according to any one of the claims 10 to 14, **characterized in that** the geometry of the housing (42) below the grooves (60) is complementary to the geometry of the first portion (78) of the respective fixation wing (68); and/or
**in that** the interface unit (16) comprises a wireless communication module (48), a code reader (44), a battery (45), electric contacts (54), and/or a display (50); and/or
**in that** the housing (42) of the interface unit (16) comprises at least one tongue (64) protruding downwards, and the base plate (66) of the mount (26) comprises at least one receiving opening (74), wherein the receiving opening (74) is located in front of the fixation wings (68), wherein the at least one tongue (64) is engaged in the at least one receiving opening (74) when the interface unit (16) is mounted on the mount (26); and/or
**in that** the housing (42) of the interface unit (16), in particular the housing base part (56), comprises two lateral lower edges (65), wherein the lateral lower edges (65) have a rounded contour and/or have a curvature.
